# EUROPÄISCHE PATENTSCHRIFT

(11) **EP 0 842 759 B1**
(45) Veröffentlichungstag und Bekanntmachung des Hinweises auf die Patenterteilung: **09.10.2002**
(21) Anmeldenummer: 97119702.5
(22) Anmeldetag: 11.11.1997
(51) Int. Cl.: B29D 30/20, B29D 30/24

(54) **Verfahren und Vorrichtung zur Herstellung eines Fahrzeugluftreifens**
Process and apparatus for manufacturing a vehicle tyre
Procédé et dispositif pour la fabrication d'un bandage pneumatic pour véhicule

(30) Priorität: 14.11.1996 DE 19647078
(43) Veröffentlichungstag der Anmeldung: 20.05.1998
(73) Patentinhaber: Continental Aktiengesellschaft, 30165 Hannover (DE)
(72) Erfinder: Glinz, Michael, 31535 Neustadt (DE)

(56) Entgegenhaltungen:
- EP-A- 0 406 821
- EP-A- 0 498 215
- DE-C- 19 630 452

## Beschreibung

Die Erfindung betrifft ein Verfahren zur Herstellung eines Fahrzeugluftreifens durch Konfektionieren eines Unterbaurohlings auf einer zylindrischen Karkassaufbautrommel mit zumindest folgenden Schritten:
a) Auflegen des Innenseelenmaterials auf die zylindrische Karkassaufbautrommel
b) Auflegen von zumindest einer Karkasseinlage, die textile Festigkeitsträger enthält oder aus solchen besteht, wobei die Enden der aufgelegten Karkasseinlage einen Überlappungsbereich bilden,
c) Setzen der Wulstkerne
d) und anschließendes Vervollständigen und Vulkanisieren des Reifenrohlings in üblicher Weise.

Bei der Herstellung eines Fahrzeugluftreifens werden die einzelnen Bauelemente des Reifens nacheinander um eine Trommel gewickelt. Dabei sind die einzelnen Schichten in Bahnen geschnitten, die solch eine Länge aufweisen, daß sie jeweils einmal um den Trommelumfang reichen. Beim Umwickeln der einzelnen Bahnen soll in der Regel das Ende jeder Bahn ihren Anfang anschließend überlappen, um sicherzustellen, daß nach der Konfektionierung und Vulkanisation des Reifenrohlings über den Umfang auch wirklich geschlossene Schichten hergestellt sind, die die Funktionstüchtigkeit des Reifens mit gewährleisten.

So wird auch beim Auflegen der Karkasseinlage, die insbesondere bei der PkW-Reifenfertigung meist aus in Kautschuk gebetteten textilen Festigkeitsträgern besteht, auf eine Überlappung der Enden der aufgelegten Karkasseinlage geachtet. Im Überlappungsbereich (ca. 2 - 6 mm) existiert also eine Verdoppelung der Materialstärke der Karkasseinlage. Demzufolge ist auch die doppelte Dichte an textilen Festigkeitsträgern vorhanden. Diese Festigkeitsträger erstrecken sich z. B. bei der Herstellung von Radialreifen quer zur Umfangsrichtung der Trommel und können z. B. aus Rayon, Polyester oder anderen organischen Festigkeitsträgern bestehen. Polyester hat den Vorteill, daß es preiswerter ist. Nachteilig an Festigkeitsträgern aus Polyester ist aber, daß sie eine höhere Dehnfähigkeit aufweisen. An der Überlappungsstelle der Karkasseinlage, in dem, wie bereits erwähnt, eine höhere Festigkeitsträgerdichte herrscht, findet beim aufgepumpten Reifen bei gleicher Zugkraftbeaufschlagung, aufgrund des veränderten E-Moduls der Überlappungszone, eine geringere Dehnung der Karkasseinlage im Überlappungsbereich im Vergleich zur übrigen Karkasseinlage statt. Im aufgepumpten Zustand des Reifens wird diese Nahtstelle als Einschnürung im Seitenwandbereich sichtbar. Die Qualität und Festigkeit des Reifens wird dadurch zwar nicht beeinträchtigt, es handelt sich jedoch um einen Schönheitsfehler, der gerade vom Laien häufig als Riß der Karkasse gedeutet und beim Reifen- oder Fahrzeughersteller reklamiert wird.

Der vorliegenden Erfindung liegt nun die Aufgabe zugrunde, die Einschnürung des Reifens im Seitenwandbereich sicher zu vermeiden.

Gelöst wird diese Aufgabe erfindungsgemäß dadurch, daß die zylindrische Karkassaufbautrommel im Überlappungsbereich der Karkasseinlage eine im wesentlichen parallel zu den textilen Festigkeitsträgern der Karkasseinlage verlaufende Erhöhung oder Vertiefung aufweist, so daß beim Auflegen der Karkasseinlage im Überlappungsbereich eine Überlänge der textilen Festigkeitsträger erzeugt wird, die die beim Aufpumpen des fertigen Reifens üblicherweise im Überlappungsbereich auftretenden Einschnürungen kompensiert.

Durch diese einfache konstruktive Maßnahme an der zylindrischen Karkassauftrommel wird das Problem der Einschnürungen im Seitenwandbereich unkompliziert gelöst. Die Festigkeitsträger im Überlappungsbereich weisen zwischen den Wulstkernen des Reifenrohlings eine größere Länge auf als die restlichen Festigkeitsträger dieser Karkasseinlage.

Als vorteilhaft hat sich erwiesen, wenn die zylindrische Karkassaufbautrommel eine Erhöhung (z.B. Leiste) oder Vertiefung (z.B. Rille) aufweist, die, 8 - 15 mm breit, 3 - 5 mm hoch oder tief und 50 - 300 mm lang ist. Bei der Herstellung von Radialreifen wird die Karkaßeinlage so aufgelegt, daß sich die Festigkeitsträger der Karkaßeinlage im wesentlichen in Axialrichtung der Karkaßaufbautrommel befinden. Die längenmäßige Erstreckung der Erhöhung oder Vertiefung ist bei der Herstellung eines solchen Reifens dann ebenfalls im wesentlichen in Axialrichtung der Karkassaufbautrommel. Die einzelnen Maße der Erhöhung oder Vertiefung richten sich nach der jeweiligen Reifengröße, die hergestellt werden soll, jedoch werden die Maße so gewählt, daß eine Überlänge der Festigkeitsträger im Überlappungsbereich zwischen den Wulstkernen bzw. Kernreitern erzeugt wird, wobei die reslichen Festigkeitsträger dieser Karkaßeinlage außerhalb des Überlappungsbereiches nicht überlängt werden. Die Höhe bzw. Tiefe der Erhöhung bzw. Vertiefung wirkt sich unmittelbar auf die Überlänge der textilen Festigkeitsträger aus. So wird eine Überlänge an textilem Material erzielt, die maximal 2x der Höhe oder Vertiefung entspricht. Das Auflegen der Karkasseinlage auf die zylindrische Karkassaufbautrommel erfolgt in der Art, daß sich die Karkasseinlagenenden im Überlappungsbereich an die Erhöhung oder Vertiefung anschmiegen. Da im allgemeinen eine schräge Anlehnung an die Erhöhung oder Vertiefung erreicht wird, wird die Überlänge an Karkasseinlage in der Regel weniger als 2x dem Maß der Höhe oder Tiefe betragen. Diese Überlänge reicht aus, um nach der Vulkanisation einen Reifen zu erhalten, dessen Karkassfestigkeitsträger im aufgepumpten Reifenzustand gleichmäßig gedehnt in der Karkasse vorliegen und somit keine Einschnürungen in der Seitenwand vorhanden sind. Die Länge der Erhöhung oder Vertiefung der Karkassaufbautrommel ist, wie bereits erwähnt, abhängig von der Reifendimension. Als vorteilhaft hat sich eine Länge der Erhöhung bzw. Vertiefung erwiesen, durch die im Überlappungsbereich der Karkasseinlage eine Überlänge erzeugt wird, die sich im fertigen Reifen zwischen den flexiblen Zonen der Seitenwände erstreckt, da im Seitenbereich die Einschnürungen sichtbar sind. Eine geringe Länge der Erhöhung bzw. Vertiefung (ca. 50 - 100 mm) bringt den Vorteil mit sich, daß der Abrollvorgang erleichtert wird.

Eine andere Methode zur Erzeugung einer Überlänge der Festigkeitsträger der Karkasseinlage im Überlappungsbereich ist, wenn die Karkasseinlage in zumindest eine Falte gelegt wird. Diese Falte verläuft so, daß durch die höhenmäßige Ausdehnung der Falte die Festigkeitsträger der Karkasseinlage eine Überlänge zwischen den Wulstkernen des Rohlings erhalten, die dann im fertigen Reifen die Seitenwandeinschnürungen verhindert. Diese Falte bzw. Falten können z. B. durch Einknicken der Karkasseinlagenenden im Überlappungsbereich erzielt werden. Vorteilhafterweise sollte soviel Karkasseinlage eingeknickt werden, daß eine Überlänge an Material von 3 - 10 mm entsteht. Das bedeutet also, daß die Summe des gesamten eingefalteten Materials 3 - 10 mm beträgt. An die Faltenlegung der Karkasseinlage ist keine bestimmte Positionierung der Trommel während des Wickelprozesses gekoppelt, was einen Vorteil dieser Variante darstellt.

Um die Einschnürungen im Seitenwandbereich zu vermeiden, ist es ausreichend, wenn bei einer mehrlagigen Karkasseinlage (z. B. Transporter-Reifen) zumindest die radial äußere Karkasseinlage im Überlappungsbereich eine Überlänge aufweist. Da sich die Einschnürungen im Seitenwandbereich besonders durch die radial äußere Karkasseinlage bemerkbar macht, ist diese Variante besonders vorteilhaft.

Es wird erfindungsgemäß ein Fahrzeugluftreifen erzielt, dessen Karkaßeinlage vorzugsweise in Kautschuk gebettete Festigkeitsträger aus vorzugsweise Polyester aufweist. Bei der Konfektionierung eines Reifenrohlings ergeben sich Vorteile beim Handling einer solchen Karkaßeinlage. Es ist prinzipiell aber auch möglich, daß die Karkaßeinlage nur von Festigkeitsträgern gebildet wird, d. h. daß eine Einbettung zwischen zwei Kautschukschichten nicht zwingend erforderlich ist. Das Aufbringen des Festigkeitsträgers auf das Innenseelenmaterial kann z. B. durch Aufspulen erfolgen. Als Festigkeitsträger eignen sich außer Polyester auch z. B. Rayon oder Aramid. Erfindungsgemäß werden Fahrzeugluftreifen erhalten, die ohne großen technischen Aufwand preisgünstig hergestellt werden können und auch nicht die unschönen Einschnürungen im Seitenwandbereich aufweisen.

Im folgenden soll ein Ausführungsbeispiel anhand einer Zeichnung näher erläutert werden.

Es zeigen schematisch:
- Fig. 1: Prinzip der Erzeugung der Überlänge an Karkasseinlage durch Leiste auf der Karkassaufbautrommel
- Fig. 2: Draufsicht auf eine Karkassaufbautrommel
- Fig. 3: Prinzip der Erzeugung der Überlänge an Karkasseinlage mittels Faltenlegung
- Fig. 4: Teil eines Querschnittes einer Reifenrohlingkarkasse.

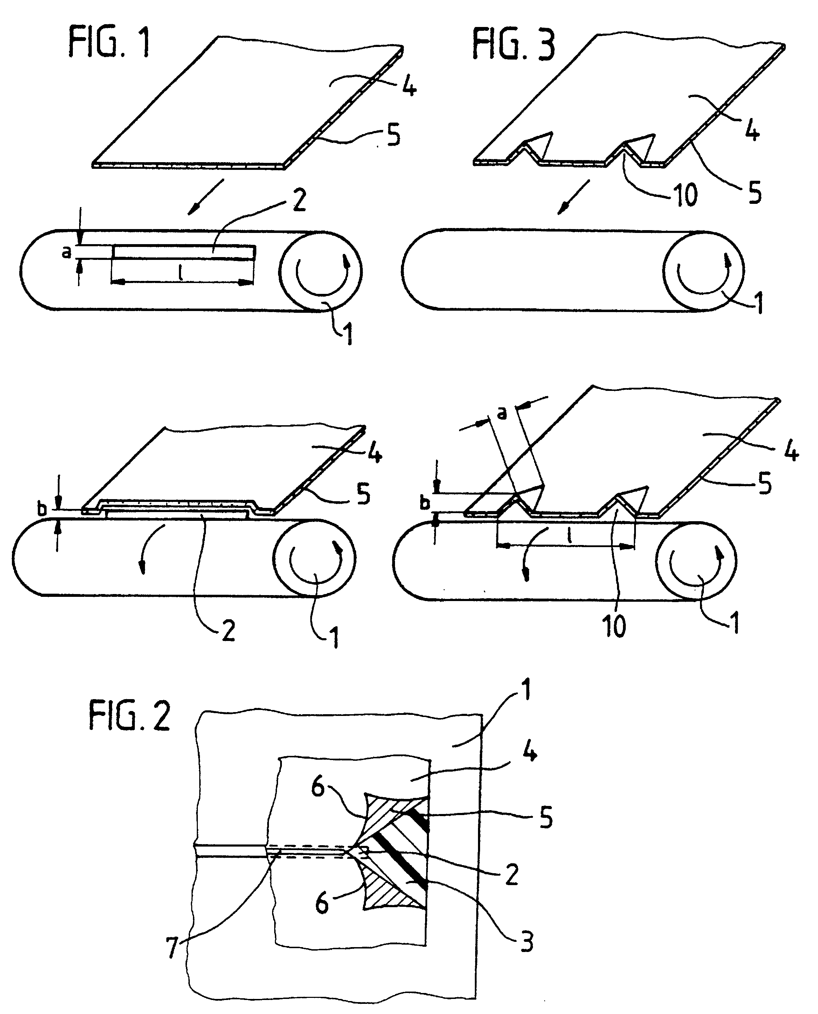

In der Figur 1 ist eine zylindrische Karkassaufbautrommel 1 für z. B. die Herstellung eines Radialreifens mit der Dimension 195/70 R 15 dargestellt, auf deren Oberfläche sich eine metallische Leiste 2 befindet. Diese Leiste 2 kann z. B. durch Kleben oder Schrauben an der Karkassaufbautrommel befestigt sein. Die Leiste ist ca. 12 mm breit (a), ca. 4 mm hoch (b) und ca. 250 mm lang (l). Die Enden der Leiste 2 sind vorzugsweise abgerundet. Zusätzlich ist in der Figur 1 dargestellt, wie prinzipiell das Aufwickeln der Karkasseinlage 4, die Festigkeitsträger 5 enthält, die in Kautschuk eingebettet sind, auf die Aufbautrommel 1 erfolgt. Die Festigkeitsträger 5 sind so angeordnet, daß sich diese im wesentlichen in Axialrichtung der Karkaßaufbautrommel befinden (Kettfäden) und daß wenige in Umfangsrichtung liegen (Schußfäden). Letztere haben nur eine sehr geringe Bedeutung für den Reifenaufbau, so daß diese auch keinen Einfluß auf z. B. den Effekt der Seitenwandeinschnürungen besitzen.

Prinzipiell ist es auch möglich, anstatt der Leiste 2 eine Rille in die Karkassaufbautrommel einzubringen. Die aufgelegte Karkasseinlage 4 kann dann z. B. durch Anlegen eines Vakuums oder mittels eines Stempels in die Rille gedrückt werden.

Bei der Konfektionierung eines Reifenrohlings (dargestellt in der Figur 2) wird zuerst die Innenseele 3 auf die Karkassaufbautrommel 1 gelegt. Die Enden der Innenseelenlage können auf Stoß gelegt sein oder aber auch eine Überlappung bilden. Durch die Leiste 2, die sich erfindungsgemäß auf der Karkassaufbautrommel 1 befindet, wird auch eine Überlänge an Innenseelenmaterial erzeugt, die aber keinen Einfluß auf die Qualität oder das Erscheinungsbild des Reifens hat. Auf das Innenseelenmaterial 3 wird anschließend die Karkasseinlage 4 aufgelegt. Die Karkasseinlage 4 weist in Kautschuk eingebettete Festigkeitsträger 5 aus Polyester auf. Die Enden 6 der Karkasseinlage 4 überlappen sich auf der Leiste 2 in einen Überlappungsbereich 7. Der Überlappungsbereich 7 der beiden Karkasseinlagenenden 6 beträgt ca. 5 mm. Nach der Karkasseinlage 4 werden weitere nicht dargestellte Bauteile (z. B. Wulstkerne, Kernreiter) an der Karkassaufbautrommel konfektioniert werden, wobei die beiden Wulstkerne/Kernreiter außerhalb der Leiste 2 der Karkaßaufbautrommel angeordnet sind. Nach dem Auflegen von weiteren Reifenbestandteilen wie z. B. Gürtelpaket erfolgt die Bombage des Rohlings. Anschließend werden Laufstreifen und Seitenwände aufgebracht und der Rohling kann vulkanisiert werden. Prinzipiell ist die Erzeugung einer Überlänge an Karkasseinlage nicht nur für die Herstellung eines soeben beschriebenen Radialreifen denkbar, sondern auch für Diagonalreifen.

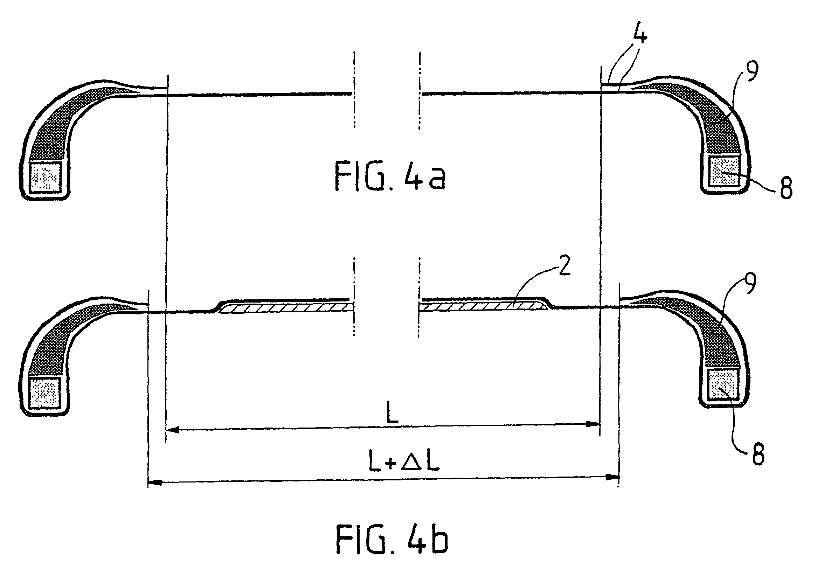

Die Figur 3 verdeutlicht den Fall, daß die Überlänge der Festigkeitsträger 5 der Karkasseinlage 4 durch Erzeugung von zwei Falten 10 gebildet wird. Die Breite einer Falte, bezogen auf die Umfangsrichtung der Karkassaufbautrommel, weist das Maß a (ca. 10 mm) auf, die Höhe b soll ca. 5 mm betragen und die Länge I zwischen den beiden Falten soll ca. 250 mm lang sein. Diese Maße beziehen sich wiederum auf einen Radialreifen mit der Größe 195/70 R 15. Eine so gefaltete Karkasseinlage wird zur Konfektionierung eines Reifenrohlings in herkömmlicher Art und Weise verwendet. Die Karkasseinlagenfalten können entweder vor Auflegen des Materials auf die Karkassaufbautrommel oder direkt an dieser erzeugt werden.

In den Darstellungen der Figuren 4a und 4b soll die Erzeugung der erfindungsgemäßen Überlänge der Festigkeitsträger 5 der Karkasseinlage 4 durch die Leiste 2 (Falte 10) in einem schematisch vereinfachten Querschnitt eines erfindungsgemäßen Reifenrohlings im Vergleich zu einem herkömmlichen, noch einmal verdeutlicht werden. Die Figuren 4a (herkömmliche Reifen) und 4b (erfindungsgemäße Reifen) zeigen eine Karkasseinlage 4, die um die metallischen Wulstkerne 8 und dem Kernreiter 9 geschlagen ist. Durch die Höhe der Leiste 2 (Falte 10), an die sich die Karkasseinlage 4 anschmiegt, wird eine Überlänge der Festigkeitsträger der Karkasseinlage Δ L zwischen den beiden Wulstkernen/Kernreitern erzeugt. Diese Überlänge Δ L, die insgesamt < 2x der Höhe der Leiste (Falte 10), also im Fall der Leiste < 8 mm beträgt, gleicht Schrumpfungen des textilen Festigkeitsträgers (Polyester) der Karkaßeinlage aus, so daß Einschnürungen im Seitenwandbereich vermieden werden.

## Patentansprüche

1. Verfahren zur Herstellung eines Fahrzeugluftreifens durch Konfektionieren eines Unterbaurohlings auf einer zylindrischen Karkassaufbautrommel (1) mit zumindest folgenden Schritten:
a. Auflegen des Innenseelenmaterials (3) auf die zylindrische Karkassaufbautrommel (1)
b. Auflegen von zumindest einer Karkasseinlage (4), die textile Festigkeitsträger (5) enthält oder aus solchen besteht, wobei die Enden (6) der aufgelegten Karkasseinlage einen Überlappungsbereich (7) bilden,
c. Setzen der Wulstkerne (8)
d. und anschließendes Vervollständigen und Vulkanisieren des Reifenrohlings in üblicher Weise
**dadurch gekennzeichnet,**
**daß** die zylindrische Karkassaufbautrommel (1) im Überlappungsbereich (7) der Karkasseinlage (4) eine im wesentlichen parallel zu den textilen Festigkeitsträgern (5) der Karkasseinlage (4) verlaufende Erhöhung oder Vertiefung aufweist, so daß beim Auflegen der Karkasseinlage (4) im Überlappungsbereich (7) eine Überlänge der textilen Festigkeitsträger erzeugt wird, die die beim Aufpumpen des fertigen Reifens üblicherweise im Überlappungsbereich (7) auftretenden Einschnürungen kompensiert.

2. Verfahren zur Herstellung eines Fahrzeugluftreifens nach Anspruch 1, **dadurch gekennzeichnet, daß** die Überlänge der Festigkeitsträger der Karkasseinlage (4) im Überlappungsbereich (7) durch eine Erhöhung oder Vertiefung erzeugt wird, die 8 - 15 mm breit, 3 - 5 mm hoch oder tief und 50 - 300 mm lang ist.

3. Verfahren zur Herstellung eines Fahrzeugluftreifens durch Konfektionieren eines Unterbaurohlings auf einer zylindrischen Karkassaufbautrommel (1) mit zumindest folgenden Schritten:
a. Auflegen des Innenseelenmaterials (3) auf die zylindrische Karkassaufbautrommel (1)
b. Auflegen von zumindest einer Karkasseinlage (4), die textile Festigkeitsträger (5) enthält oder aus solchen besteht, wobei die Enden (6) der aufgelegten Karkasseinlage (4) einen Überlappungsbereich (7) bilden,
c. Setzen der Wulstkerne (8)
d. und anschließendes Vervollständigen und Vulkanisieren des Reifenrohlings in üblicher Weise, **dadurch gekennzeichnet, daß** im Überlappungsbereich (7) der Karkasseinlage (4) eine Überlänge der Festigkeitsträger erzeugt wird, indem die Karkasseinlage (4) in zumindest eine Falte gelegt wird, die die beim Aufpumpen des fertigen Reifens üblicherweise im Überlappungsbereich (7) auftretenden Einschnürungen kompensiert.

4. Verfahren zur Herstellung eines Fahrzeugluftreifens nach Anspruch 3, **dadurch gekennzeichnet, daß** die Überlänge der textilen Festigkeitsträger der Karkasseinlage (4), die mittels der Falte erzeugt wird, 3 - 10 mm beträgt.

5. Verfahren zur Herstellung eines Fahrzeugluftreifens nach zumindest einem der vorhergehenden Ansprüche, **dadurch gekennzeichnet, daß** eine mehrlagige Karkasseinlage (4) verwendet wird, wobei im Überlappungsbereich (7) zumindest der radial äußeren Karkasseinlage (4) eine Überlänge der textilen Festigkeitsträger erzeugt wird.

6. Verfahren zur Herstellung eines Fahrzeugluftreifens nach zumindest einem der vorhergehenden Ansprüche, **dadurch gekennzeichnet, daß** als textiler Festigkeitsträger (5) der Karkasseinlage (4) Polyester verwendet wird.

7. Karkassaufbautrommel für die Herstellung eines Fahrzeugluftreifens nach Anspruch 1, **dadurch gekennzeichnet, daß** auf der Oberfläche der zylindrischen Karkassaufbautrommel (1) eine Leiste (2) angebracht ist, die 8 - 15 mm breit, 3 - 5 mm hoch und 50 - 300 mm lang ist, wobei sie sich im wesentlichen parallel zur Axialrichtung der Karkassaufbautrommel (1) erstreckt.

8. Karkassaufbautrommel für die Herstellung eines Fahrzeugluftreifens nach Anspruch 1, **dadurch gekennzeichnet, daß** die Oberfläche der zylindrischen Karkassaufbautrommel (1) eine Rille aufweist, die 8 - 15 mm breit, 3 - 5 mm tief und 50 - 300 mm lang ist, wobei sie sich im wesentlichen parallel zur Axialrichtung der Karkassaufbautrommel (1) erstreckt.

9. Fahrzeugluftreifen mit einer Innenseele, einer textilen Karkasse, die um die Wulstkerne geschlagen ist und Seitenwänden, **dadurch gekennzeichnet, daß** der Fahrzeugluftreifen nach einem Verfahren nach zumindest einem der vorhergehenden Ansprüche hergestellt ist.

## Claims

1. Method of producing a pneumatic vehicle tyre by manufacturing a substructure blank on a cylindrical carcase building drum (1), said method having at least the following steps:
a. depositing the inner core material (3) on the cylindrical carcase building drum (1),
b. depositing at least one carcase insert (4), which includes textile reinforcing members (5) or is formed from such, the ends (6) of the deposited carcase insert forming an overlap region (7),
c. placing the bead cores (8),
d. and subsequently completing and vulcanising the tyre blank in conventional manner,
**characterised in that** the cylindrical carcase building drum (1) has, in the overlap region (7) of the carcase insert (4), a raised or indented portion which extends substantially parallel to the textile reinforcing members (5) of the carcase insert (4), so that, when the carcase insert (4) is deposited, an excessive length of the textile reinforcing members is produced in the overlap region (7), said excessive length compensating for the constrictions which occur usually in the overlap region (7) during inflation of the finished tyre.

2. Method of producing a pneumatic vehicle tyre according to claim 1, **characterised in that** the excessive length of the reinforcing members of the carcase insert (4) is produced in the overlap region (7) by a raised or indented portion which has a width of 8 - 15 mm, a height or depth of 3 - 5 mm and a length of 50 - 300 mm.

3. Method of producing a pneumatic vehicle tyre by manufacturing a substructure blank on a cylindrical carcase building drum (1), said method having at least the following steps:
a. depositing the inner core material (3) on the cylindrical carcase building drum (1),
b. depositing at least one carcase insert (4), which includes textile reinforcing members (5) or is formed from such, the ends (6) of the deposited carcase insert (4) forming an overlap region (7),
c. placing the bead cores (8),
d. and subsequently completing and vulcanising the tyre blank in conventional manner,
**characterised in that** an excessive length of the reinforcing members is produced in the overlap region (7) of the carcase insert (4), as a result of the carcase insert (4) being placed in at least one fold, which compensates for the constrictions which occur usually in the overlap region (7) during inflation of the finished tyre.

4. Method of producing a pneumatic vehicle tyre according to claim 3, **characterised in that** the excessive length of the textile reinforcing members of the carcase insert (4), which is produced by means of the fold, is 3 - 10 mm.

5. Method of producing a pneumatic vehicle tyre according to at least one of the preceding claims, **characterised in that** a multi-ply carcase insert (4) is used, an excessive length of the textile reinforcing members being produced in the overlap region (7) of at least the radially outer carcase insert (4).

6. Method of producing a pneumatic vehicle tyre according to at least one of the preceding claims, **characterised in that** polyester is used as the textile reinforcing member (5) of the carcase insert (4).

7. Carcase building drum for producing a pneumatic vehicle tyre according to claim 1, **characterised in that** a bar (2), which has a width of 8 - 15 mm, a height of 3 - 5 mm and a length of 50 - 300 mm, is fitted on the surface of the cylindrical carcase building drum (1), said bar extending substantially parallel to the axial direction of the carcase building drum (1).

8. Carcase building drum for producing a pneumatic vehicle tyre according to claim 1, **characterised in that** the surface of the cylindrical carcase building drum (1) includes a groove which has a width of 8 - 15 mm, a depth of 3 - 5 mm and a length of 50 - 300 mm, said groove extending substantially parallel to the axial direction of the carcase building drum (1).

9. Pneumatic vehicle tyre, having an inner core, a textile carcase which is wrapped round the bead cores, and sidewalls, **characterised in that** the pneumatic vehicle tyre is produced according to a method according to at least one of the preceding claims.

## Revendications

1. Procédé de fabrication d'un pneumatique de véhicule par confection d'une ébauche de carcasse sur un tambour cylindrique (1) de montage de la carcasse, comprenant au moins les étapes suivantes consistant :
a. à appliquer le matériau (3) à âme intérieure sur le tambour cylindrique (1) de montage de la carcasse,
b. à appliquer au moins une armature de carcasse (4) qui contient des nappes de renfort (5) textiles ou bien se compose de telles nappes de renfort, où les extrémités (6) de l'armature de carcasse appliquée forment une zone de chevauchement (7),
c. à placer les tringles (8) et, ensuite,
d. à procéder de manière habituelle à l'achèvement et à la vulcanisation de l'ébauche du pneumatique,
**caractérisé en ce que** le tambour cylindrique (1) de montage de la carcasse présente, dans la zone de chevauchement (7) de l'armature (4) de la carcasse, une élévation ou un creux s'étendant pratiquement de façon parallèle aux nappes de renfort (5) textiles de l'armature (4) de la carcasse, de sorte qu'une surlongueur des nappes de renfort textiles est produite dans la zone de chevauchement (7) lors de l'application de l'armature (4) de la carcasse, laquelle surlongueur compense les phénomènes de compression se produisant habituellement dans la zone de chevauchement (7), lors du gonflage du pneumatique fini.

2. Procédé de fabrication d'un pneumatique de véhicule selon la revendication 1, **caractérisé en ce que** la surlongueur des nappes de renfort de l'armature (4) de la carcasse est produite, dans la zone de chevauchement (7), par une élévation ou un creux dont la largeur est comprise entre 8 mm et 15 mm, la hauteur ou la profondeur entre 3 mm et 5 mm et la longueur entre 50 mm et 300 mm.

3. Procédé de fabrication d'un pneumatique de véhicule par confection d'une ébauche de carcasse sur un tambour cylindrique (1) de montage de la carcasse, comprenant au moins les étapes suivantes consistant :
a. à appliquer le matériau (3) à âme intérieure sur le tambour cylindrique (1) de montage de la carcasse,
b. à appliquer au moins une armature de carcasse (4) qui contient des nappes de renfort (5) textiles ou bien se compose de telles nappes de renfort, où les extrémités (6) de l'armature de carcasse appliquée forment une zone de chevauchement (7),
c. à placer les tringles (8) et, ensuite,
d. à procéder de manière habituelle à l'achèvement et à la vulcanisation de l'ébauche du pneumatique,
**caractérisé en ce qu'**une surlongueur des nappes de renfort est produite dans la zone de chevauchement (7) de l'armature (4) de la carcasse, tandis que l'armature (4) de la carcasse est placée dans au moins un pli qui compense les phénomènes de compression se produisant habituellement dans la zone de chevauchement (7), lors du gonflage du pneumatique fini.

4. Procédé de fabrication d'un pneumatique de véhicule selon la revendication 3, **caractérisé en ce que** la surlongueur des nappes de renfort textiles de l'armature (4) de la carcasse, qui est produite au moyen du pli, est comprise entre 3 mm et 10 mm.

5. Procédé de fabrication d'un pneumatique de véhicule selon au moins l'une quelconque des revendications précédentes, **caractérisé en ce que** l'on utilise une armature de carcasse (4) multicouche, où une surlongueur des nappes de renfort textiles est produite dans la zone de chevauchement (7) au moins de l'armature extérieure radiale (4) de la carcasse.

6. Procédé de fabrication d'un pneumatique de véhicule selon au moins l'une quelconque des revendications précédentes, **caractérisé en ce que** l'on utilise du polyester comme nappes de renfort (5) textiles de l'armature (4) de la carcasse.

7. Tambour cylindrique de montage de la carcasse utilisé pour la fabrication d'un pneumatique de véhicule selon la revendication 1, **caractérisé en ce qu'**une nervure (2) est placée sur la surface du tambour cylindrique (1) de montage de la carcasse, nervure dont la largeur est comprise entre 8 mm et 15 mm, la hauteur entre 3 mm et 5 mm et la longueur entre 50 mm et 300 mm, et où elle s'étend pratiquement de façon parallèle à la direction axiale du tambour cylindrique (1) de montage de la carcasse.

8. Tambour cylindrique de montage de la carcasse utilisé pour la fabrication d'un pneumatique de véhicule selon la revendication 1, **caractérisé en ce que** la surface du tambour cylindrique (1) de montage de la carcasse comprend une rainure dont la largeur est comprise entre 8 mm et 15 mm, la profondeur entre 3 mm et 5 mm et la longueur entre 50 mm et 300 mm, et où elle s'étend pratiquement de façon parallèle à la direction axiale du tambour cylindrique (1) de montage de la carcasse.

9. Pneumatique de véhicule comprenant une âme intérieure, une carcasse textile qui est enfoncée autour des tringles, et des flancs, **caractérisé en ce que** le pneumatique de véhicule est fabriqué selon un procédé conforme à au moins l'une quelconque des revendications précédentes.
